# EUROPÄISCHE PATENTSCHRIFT

(11) **EP 0 548 567 B1**
(45) Veröffentlichungstag und Bekanntmachung des Hinweises auf die Patenterteilung: **11.10.1995**
(21) Anmeldenummer: 92120004.4
(22) Anmeldetag: 25.11.1992
(51) Int. Cl.: C01B 13/02

(54) **Chemischer Sauerstoffgenerator mit mehrkomponentigen Reaktionssteuerelementen**
Chemical oxygen generator with multi-component elements to control reaction
Générateur chimique d'oxygène avec dispositif de contrôle de réaction à plusieurs composants

(30) Priorität: 21.12.1991 DE 4142504
(43) Veröffentlichungstag der Anmeldung: 30.06.1993
(73) Patentinhaber: Drägerwerk Aktiengesellschaft, 23542 Lübeck (DE)
(72) Erfinder: Bechthold, Hans-Christian, Dr., W-2000 Hamburg 74 (DE); Burchardt, Udo, W-2401 Gross Grönau (DE); Ernst, Rainer, W-2406 Curau (DE); Vogeler, Karsten, W-2077 Brunsbek 3 (DE)

(56) Entgegenhaltungen:
- CH-A- 139 956
- CH-A- 180 448
- DE-A- 2 026 663
- GB-A- 2 160 187

## Beschreibung

Die Erfindung betrifft einen chemischen Sauerstoffgenerator mit einer innerhalb eines Gehäuses angeordneten Chemikalfüllung, die durch einen Zünder zu einer exothermen Sauerstoff-freisetzenden Reaktion gebracht wird, wobei die Reaktion in Form einer Reaktionsfront flächig von der zündseitigen Wandung des Gehäuses ausgehend durch die Chemikalfüllung läuft, mit mindestens einem innerhalb der Chemikalfüllung angeordneten Reaktionssteuerelement, welches quer zur Laufrichtung der Reaktionsfront angeordnet ist und einen Teil der Fläche der Reaktionsfront abdeckt oder parallel zur Laufrichtung der Reaktionsfront angeordnet ist.

Chemische Sauerstoffgeneratoren sind aufgebaut aus einer Patrone, die eine Chemikalfüllung enthält und meist an einem Ende eine Startvorrichtung in Form eines Zünders und am gegenüberliegenden Ende einen Sauerstoffauslaß aufweist. Nach Aktivierung der Startvorrichtung setzt die Chemikalfüllung (z.B. Natriumchlorat mit Zusätzen) in einer exothermen Reaktion Sauerstoff frei, der die Patrone durch den Sauerstoffauslaß verläßt. Die Reaktionsfront läuft von der Startvorrichtung zum Sauerstoffauslaß durch. Die pro Zeiteinheit gelieferte Sauerstoffmenge (der Sauerstoffflow) und die Lieferdauer hängen von der Geometrie der Chemikalfüllung und von deren Rezeptur ab. Darüber hinausgehend können Flow und Lieferdauer durch Reaktionssteuerelemente beeinflußt werden.

In der CH-PS 139 956 ist ein Sauerstoffgenerator beschrieben, bei dem die Chemikalfüllung vom Zündende ausgehend mit einem Schlitz versehen ist, der sich parallel zur Laufrichtung der Reaktionsfront bis in die Nähe des gegenüberliegenden Endes erstreckt. In den Schlitz wird eine Isolierplatte als Trennelement eingeschoben, die das Überspringen der Reaktion auf die andere Seite verhindert. Wird die Chemikalfüllung gezündet, so reagiert sie zunächst nur auf der einen Seite der Isolierplatte. Die Reaktionsfront läuft zum gegenüberliegenden Ende, greift hier auf die andere Seite der Isolierplatte über und läuft an dieser zurück bis zum Zündende. Auf diese Art wird eine etwa doppelte Laufzeit bei halbiertem Flow des Generators gegenüber einer Ausführung ohne Trennelement erhalten.

Nachteilig an diesem Generator ist, daß über die rein geometrische Verdoppelung des Reaktionsweges hinaus keine Beeinflussung von Flow und Lieferdauer möglich ist.

In der CH-PS 183 336 ist ein chemischer Sauerstoffgenerator beschrieben, der durch Trennwände in Längsrichtung in Segmente unterteilt wird. Über das Material der Trennwände und deren Funktion werden keine Aussagen gemacht. Die Beschreibung läßt jedoch vermuten, daß es sich um paraffinierten Asbestkarton handelt.

In der CH-PS 180 448 ist ein Generator beschrieben, der mit Teil-Trennwänden aus Asbest oder aus mit Paraffin überzogenem Metall versehen ist. Diese Wände sind quer zur Laufrichtung der Reaktionsfront angeordnet. Sie dienen dazu, das durch den Generator strömende Gas gleichmäßig zu verteilen. Der Paraffinüberzug dient vermutlich nur als Korrosionsschutz.

Aus den beiden letztgenannten Schriften ist kein Hinweis zu entnehmen, wie mit eingebauten Wänden der Flow und die Laufzeit eines Generators zu beeinflussen wären.

Aufgabe der Erfindung ist es, einen chemischen Sauerstoffgenerator der genannten Art dahingehend zu verbessern, daß der Sauerstoffflow und die Lieferdauer mittels eines Reaktionssteuerelementes über eine rein geometrische Verlängerung des Reaktionsweges hinaus beeinflußt werden können.

Die Aufgabe wird dadurch gelöst, daß das Reaktionssteuerelement aus einer thermischen Isolatorschicht und mindestens einer thermisch gut leitfähigen Schicht aufgebaut ist.

Vorteil der Erfindung ist es, daß durch die Wahl verschiedener Materialien und Materialdicken sowie durch Anzahl und Anordnung der Reaktionssteuerelemente der Sauerstoffflow und die Lieferdauer in weiten Grenzen beeinflußt werden können. Der Sauerstoffflow kann auch einem vorgebbaren Profil angepaßt werden.

Die thermisch gut leitfähige Schicht der Reaktionssteuerelemente dient dazu, der Reaktionsfront Wärme zu entziehen und somit die Reaktion zu verlangsamen. Das geschieht zum einen dadurch, daß das Material selbst Wärme absorbiert und zum anderen dadurch, daß es Wärme zum Generatorgehäuse und darüber an die Umgebung ableitet. Die Materialart und die Dicke des Bleches beeinflussen die abgeleitete Wärmemenge. Die thermische Isolatorschicht behindert die Wärmeleitung in den hinter einem Reaktionssteuerelement liegenden Teil der Chemikalfüllung und wirkt somit auch verlangsamend auf die Reaktion ein. Durch die Verlangsamung der Reaktion sinkt der Sauerstoffflow und die Lieferdauer steigt.

Wird das Reaktionssteuerelement sandwichartig aus zwei thermisch gut leitfähigen Schichten mit einer dazwischen angeordneten thermischen Isolatorschicht aufgebaut, so tritt der Wärme absorbierende und ableitende Effekt beidseitig auf und das Reaktionssteuerelement hat eine noch stärkere reaktionsverlangsamende Wirkung.

Als thermisch gut leitfähige Schicht können Bleche aus Metallen wie z.B. Edelstahl, Messing und Kupfer verwandt werden. Als thermische Isolatorschicht kommen in Frage: Platten, Faserplatten, Vliese oder aufgeschäumte Körper aus Glas, Keramik oder sonstigen anorganischen Materialien.

Werden die ein- oder beidseitig auf die Isolierschicht aufgebrachten Bleche mit zahlreichen Löchern versehen, so kann der freigesetzte Sauerstoff in die Isolatorschicht eindringen und als Folge davon lagert sich bei der Reaktion entstehender Staub an der Isolatorschicht ab. Das Reaktionssteuerelement wirkt somit zusätzlich als Staubfilter.

Werden in den Innenraum eines Generatorgehäuses Reaktionssteuerelemente quer zur Laufrichtung der Reaktionsfront derart eingebaut, daß sie die Fläche der Reaktionsfront zum Teil überdecken, so wird an jedem Reaktionssteuerelement die Reaktionsgeschwindigkeit verlangsamt.
Werden die von aufeinanderfolgenden Reaktionssteuerelementen abgedeckten Flächen versetzt angeordnet, so wird die Reaktionsfront jeweils in ihrer Laufrichtung abgelenkt. Es entsteht ein zickzackförmiger Weg der Reaktionsfront, der länger ist als ein gerader Weg. Dadurch verlängert sich noch einmal die Lieferdauer des Generators.

Reaktionssteuerelemente können auch parallel zur Laufrichtung der Reaktionsfront über die gesamte Reaktionsstrecke oder Teile davon angeordnet werden.
Die Reaktionssteuerelemente entziehen der Reaktionsfront Wärme und verlangsamen damit die Reaktion und erhöhen die Lieferdauer des Generators.

Wird ein Reaktionssteuerelement so eingebaut, daß es sich von einer parallel zur Laufrichtung der Reaktionsfront liegenden Gehäusewand bis zur gegenüberliegenden erstreckt und von der zündseitigen Gehäusewand bis in die Nähe der in Laufrichtung der Reaktionsfront gegenüberliegenden Wand reicht, so ergibt sich ein U-förmiger Weg der Reaktionsfront. Zu dem nahezu verdoppelten Weg der Reaktionsfront kommt ein verlangsamender Einfluß des Reaktionssteuerelementes hinzu, so daß die Lieferdauer des Generators gegenüber einem ohne Einbauten mehr als verdoppelt werden kann.

Durch zwei Reaktionssteuerelemente kann die Lieferdauer mehr als verdreifacht werden.

Durch den Einbau eines schneckenförmigen Reaktionssteuerelementes in Form einer Förderschnecke, das einen wendelförmigen Weg der Reaktionsfront erzwingt oder in einer Form ähnlich einem Schneckengehäuse, das einen spiralig gewundenen Weg der Reaktionsfront erzwingt, kann die Lieferdauer noch einmal erheblich verlängert werden.

Alle Reaktionssteuerelemente können auch als einfaches Blech oder als einfache Isolierschicht ausgebildet werden. Die Verlängerung der Lieferdauer fällt dann jedoch gegenüber der mit einem aus Blech und Isolatorschicht aufgebauten Reaktionssteuerelement erzielten Verlängerung geringer aus.

Die Erfindung wird anhand von Ausführungsbeispielen und der Zeichnung erläutert.

Es zeigen:
- Fig. 1: einen chemischen Sauerstoffgenerator mit quer zur Laufrichtung der Reaktionsfront eingebauten Reaktionssteuerelementen,
- Fig. 2: verschiedene Ausführungsformen von Reaktionssteuerelementen,
- Fig. 3: ein sandwichartig aufgebautes Reaktionssteuerelement im Schnitt,
- Fig. 4: einen Sauerstoffgenerator mit einem parallel zur Laufrichtung der Reaktionsfront eingebauten Reaktionssteuerelement,
- Fig. 5: einen Sauerstoffgenerator mit einem schneckenförmigen Reaktionssteuerelement und
- Fig. 6: einen Sauerstoffgenerator mit einem spiralig gewundenen Reaktionssteuerelement.

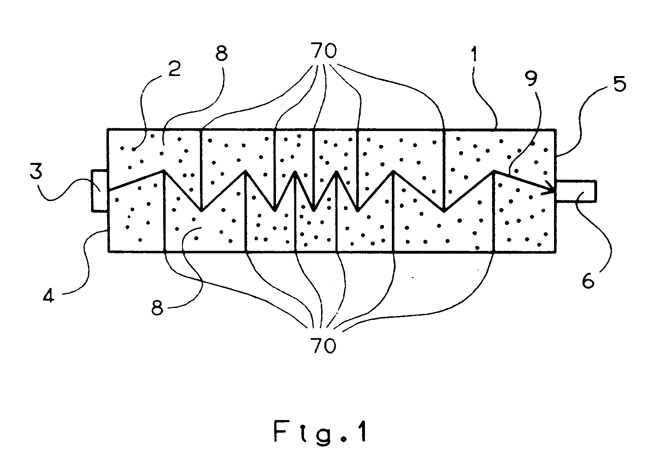

In Fig. 1 ist ein chemischer Sauerstoffgenerator schematisch im Schnitt dargestellt. In einem zylindrischen Gehäuse (1) ist eine Chemikalfüllung (2) angeordnet, die mittels eines Zünders (3) zur Reaktion gebracht werden kann. Die Reaktion läuft vom zündseitigen Ende (4) des Gehäuses (1) zum gegenüberliegenden Ende (5) durch, an dem ein Auslaß (6) für den freigesetzten Sauerstoff angebracht ist.
Quer zur Laufrichtung der Reaktion sind innerhalb der Chemikalfüllung (2) mehrere Reaktionssteuerelemente (70) angeordnet. Die Reaktionssteuerelemente (70) haben die Form von Kreisabschnitten, wobei der Kreisdurchmesser dem inneren Durchmesser des Gehäuses (1) entspricht. Die Reaktionssteuerelemente dichten somit an ihrem Umfang die Querschnittsfläche des Gehäuses (1) ab und lassen nur in dem Bereich, in dem sie von der Kreisform abweichen, einen Durchlaß (8) für die Reaktion frei. Dieser Durchlaß (8) ist kleiner als die halbe Querschnittsfläche des Gehäuses (1). Aufeinanderfolgende Reaktionselemente (70) sind mit ihren Durchlässen (8) um jeweils 180° versetzt, so daß sich ein zickzackförmiger Weg (9) der Reaktionsfront ergibt.

An jedem Reaktionssteuerelement (70) wird die Reaktionsfront umgelenkt, wodurch der Weg der Reaktionsfront gegenüber einem Generator ohne Einbauten verlängert wird. Außerdem wird der Reaktionsfront durch die Reaktionssteuerelemente Energie entzogen, wodurch die Reaktionsgeschwindigkeit sinkt. Beide Effekte bewirken ein Sinken des Sauerstoffflows und ein Ansteigen der Lieferdauer.
Durch Anzahl, Abstand der Reaktionssteuerelemente (70) untereinander, Fläche der Durchlässe (8) und die Bauart der Reaktionssteuerelemente (70) kann der Sauerstoffflow in weiten Grenzen variiert werden und der zeitliche Verlauf einem Sollprofil angepaßt werden.

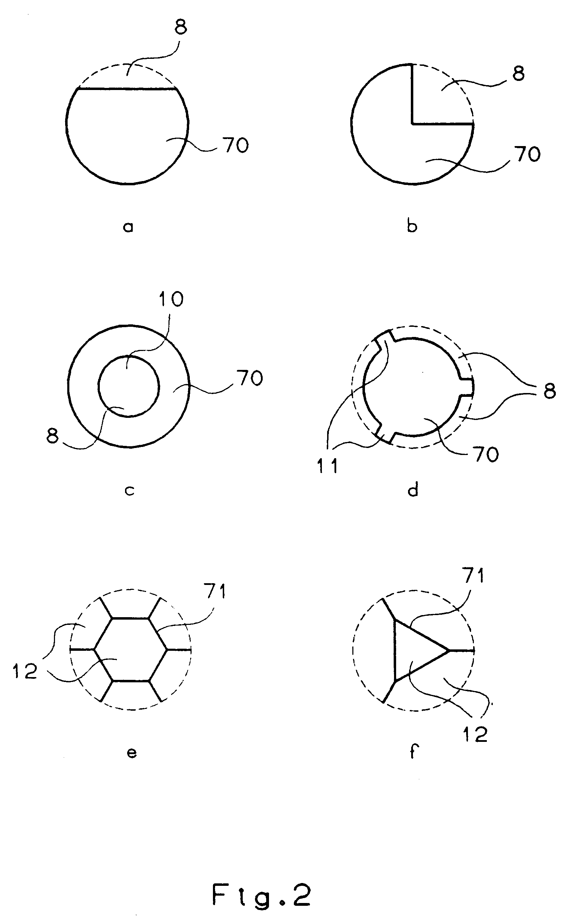

In Fig. 2 sind verschiedene Ausführungsformen von Reaktionssteuerelementen (70, 71) dargestellt, wobei die Formen a bis d für den Einbau quer und die Formen e und f parallel zur Laufrichtung der Reaktionsfront vorgesehen sind. Die gestrichelten Kreislinien geben jeweils den Verlauf des Innendurchmessers des Gehäuses (1) an. Der sich ergebende Durchlaß (8) ist jeweils gekennzeichnet. Form a und b sind verschiedene Kreisabschnitte. Weitere Formen mit gekrümmten Schnittlinien und Scheiben mit Löchern nahe dem Rand sind denkbar. Form c zeigt eine Kreisscheibe mit einem zentralen Loch (10), Form d eine Kreisscheibe, deren Durchmesser kleiner als der des Gehäuses (1) ist und die durch drei Nasen (11) im Gehäuse (1) fixiert wird. Werden die Reaktionssteuerelemente (70) nach Form c und d abwechselnd angeordnet, so läuft die Reaktionsfront abwechselnd zum Zentrum und zum Umfang des Gehäuses (1).

Form e und f zeigen Reaktionssteuerelemente (71) im Schnitt, die parallel zur Laufrichtung der Reaktionsfront angeordnet sind. Die Querschnittsfläche des Gehäuses (1) wird durch sie in mehrere Kammern (12) unterteilt, in denen die Reaktionsfront gleichzeitig läuft. Durch Energieentzug wird die Reaktion verlangsamt. Das Ausmaß des Energieentzuges wird durch die Anzahl und Größe der gebildeten Kammern (12) und durch Art und Dicke des Metallbleches des Reaktionssteuerelementes (71) beeinflußt.

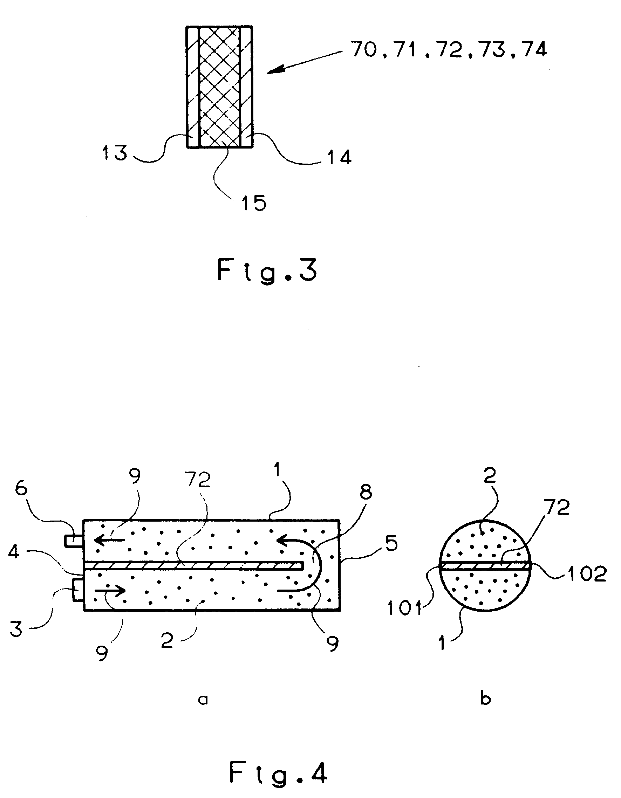

Fig. 3 zeigt ein sandwichartig aufgebautes Reaktionssteuerelement (70, 71, 72, 73, 74) im Schnitt. Es besteht aus zwei thermisch gut leitenden Schichten (13, 14) in Form von Blechen aus nichtrostendem Stahl und einer dazwischen angeordneten thermischen Isolatorschicht (15) in Form einer Keramikfaserplatte. Nähert sich die Reaktionsfront z.B. von links an das Reaktionssteuerelement (70, 71, 72, 73, 74) an, so entzieht das Blech (13) der Reaktionsfront Wärme zur eigenen Aufheizung und weiter dadurch, daß es die Wärme zum Gehäuse ableitet. Die Isolatorschicht (15) verhindert ein Vorheizen der rechts von dem Reaktionssteuerelement (70, 71, 72, 73, 74) liegenden hier nicht dargestellten Chemikalfüllung (2). Ist die Reaktionsfront auf die rechte Seite des Reaktionssteuerelementes (70, 71, 72, 73, 74) vorgedrungen, so entzieht das Blech (14) der Reaktionsfront wieder Wärme. Durch die Art des Materials der Bleche (13, 14) und deren Dicke kann der Wärmeentzug beeinflußt werden.

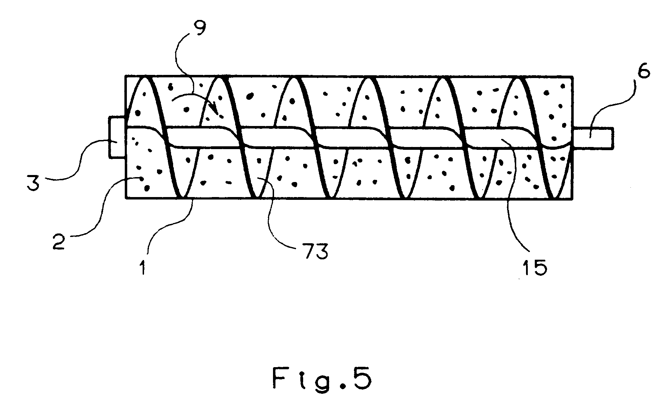

In Fig. 4 ist ein chemischer Sauerstoffgenerator schematisch im Längsschnitt (a) und im Querschnitt (b) dargestellt, in dem ein parallel zur Laufrichtung der Reaktionsfront angeordnetes Reaktionssteuerelement (72) angeordnet ist. Es erstreckt sich quer mittig durch die Querschnittsfläche des Generatorgehäuses (1) von einer Wandung (101) zur gegenüberliegenden (102) und längs der Achse des Generators vom zündseitigen Ende (4) bis in die Nähe des gegenüberliegenden Endes (5). An diesem Ende (5) bleibt ein Durchlaß (8) für die Reaktionsfront (9) frei.

Nach Zündung der Chemikalfüllung (2) mittels des Zünders (3) läuft die Reaktionsfront (9) auf der einen Seite des Reaktionssteuerelementes (72) auf das Ende (5) des Generators zu, greift im Bereich des Durchlasses (8) auf die andere Seite über und läuft auf dieser zurück bis zum Sauerstoffauslaß (6). Durch den U-förmigen Weg der Reaktionsfront (9) und die Verlangsamung der Reaktion durch das Reaktionssteuerelement (72) ergibt sich gegenüber einem Generator ohne Einbauten eine wesentlich mehr als verdoppelte Lieferdauer bei entsprechend reduziertem Sauerstoffflow. Der Sauerstoffauslaß (6) kann auch an dem dem Zünder (3) gegenüberliegenden Ende (5) des Gehäuses (1) angeordnet sein.

Fig. 5 zeigt einen Generator im Schnitt, in dessen Gehäuse (1) innerhalb der Chemikalfüllung (2) ein in Form einer Förderschnecke (73) gewundenes Reaktionssteuerelement angeordnet ist. Es erstreckt sich radial von einem geschlossenen Kern (15) bis zur Wandung des Gehäuses (1) und axial vom zündseitigen Ende des Gehäuses (1) bis zu dessen gegenüberliegenden Ende, an dem der Sauerstoffauslaß (6) angeordnet ist.
Nach Zündung durch den Zünder (3) läuft die Reaktionsfront (9) wendelförmig zum Auslaß (6). Es ergibt sich ein stark verlängerter Weg der Reaktionsfront(9) mit entsprechend verlängerter Lieferdauer. Durch eine variable Steigung des Reaktionssteuerelementes (73) längs des Weges der Reaktionsfront (9) kann der Verlauf des Sauerstoffflows einem vorgebbaren Profil angepaßt werden. Das Reaktionssteuerelement(73) muß nicht auf der ganzen Länge des Gehäuses (1) angeordnet sein, sondern es kann in einem oder mehreren Teilbereichen, in denen eine Verlangsamung der Reaktion gewünscht wird, angeordnet werden.

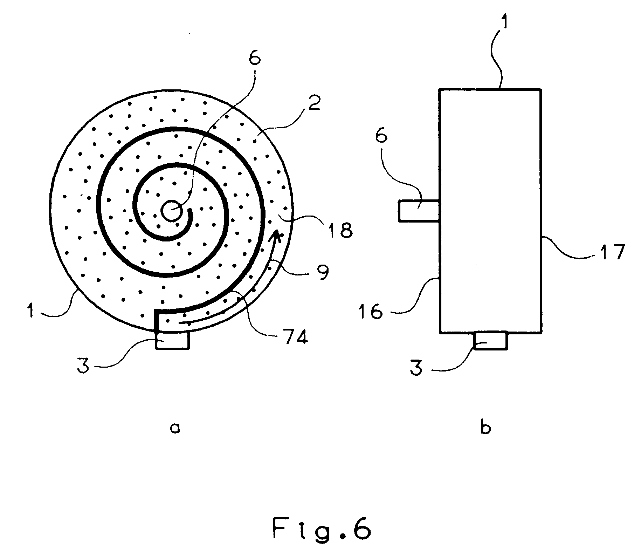

Fig. 6 zeigt als letztes Beispiel einen Generator in Seitenansicht (b) und in Draufsicht (a) im Schnitt, dessen Gehäuse(1)in Form einer flachen Dose ausgebildet ist. Das Reaktionssteuerelement ist als spiralig gewundenes Band (74) ausgebildet und erstreckt sich vom Boden (16) bis zum Deckel (17) des Gehäuses (1) Das eine Ende des Bandes ist mit der Außenwandung des Gehäuses (1) verbunden und das andere Ende liegt in der Nähe des Zentrums des Gehäuses (1).
Es erzeugt im Innenraum des Gehäuses (1) einen spiralig gewundenen Kanal (18), der mit der Chemikalfüllung (2) gefüllt ist. An diesem Kanal (18) ist an dem innen gelegenen Ende ein Sauerstoffauslaß (6) und an dem äußeren Ende ein Zünder (3) angebracht.
Die Anordnung von Zünder (3) und Sauerstoffauslaß (6) kann auch vertauscht werden. Die Reaktionsfront (9) läuft in dem spiralig gewundenen Kanal (18). Die Lieferdauer wird erhöht durch den verlängerten Weg der Reaktionsfront (9) und durch den Energieentzug, den das Reaktionssteuerelement (74) bewirkt.

## Patentansprüche

1. Chemischer Sauerstoffgenerator mit einer innerhalb eines Gehäuses angeordneten Chemikalfüllung, die durch einen Zünder zu einer exothermen Sauerstoff-freisetzenden Reaktion gebracht wird, wobei die Reaktion in Form einer Reaktionsfront flächig von der zündseitigen Wandung des Gehäuses ausgehend durch die Chemikalfüllung läuft, mit mindestens einem innerhalb der Chemikalfüllung angeordneten Reaktionssteuerelement, welches quer zur Laufrichtung der Reaktionsfront angeordnet ist und einen Teil der Fläche der Reaktionsfront abdeckt oder parallel zur Laufrichtung der Reaktionsfront angeordnet ist, dadurch gekennzeichnet, daß das Reaktionssteuerelement (70, 71, 72, 73, 74) aus einer thermischen Isolatorschicht (15) und mindestens einer thermisch gut leitfähigen Schicht (13, 14) aufgebaut ist.

2. Chemischer Sauerstoffgenerator nach Anspruch 1, dadurch gekennzeichnet, daß das Reaktionssteuerelement (70, 71, 72, 73, 74) sandwichartig aus zwei thermisch gut leitfähigen Schichten (13, 14) mit einer dazwischen angeordneten thermischen Isolatorschicht (15) aufgebaut ist.

3. Chemischer Sauerstoffgenerator nach Anspruch 1 oder 2, dadurch gekennzeichnet, daß die thermisch gut leitfähige Schicht des Reaktionssteuerelemente (70, 71, 72, 73, 74) als Metallblech (13, 14) ausgebildet ist.

4. Chemischer Sauerstoffgenerator nach einem der Ansprüche 1 bis 3, dadurch gekennzeichnet, daß die thermische Isolatorschicht (15) des Reaktionssteuerelementes (70, 71, 72, 73, 74) aus Glas, keramischem oder mineralischem Material aufgebaut ist und in Form eines Faservlieses, einer Faserplatte oder als aufgeschäumter Körper verarbeitet ist.

5. Chemischer Sauerstoffgenerator nach einem der Ansprüche 1 bis 4, dadurch gekennzeichnet, daß ein oder mehrere Reaktionssteuerelemente (70) senkrecht zur Laufrichtung der Reaktionsfront (9) angeordnet sind und die Reaktionssteuerelemente (70) etwa 50 % bis 90 % der Fläche der Reaktionsfront (9) abdecken.

6. Chemischer Sauerstoffgenerator nach Anspruch 5, dadurch gekennzeichnet, daß aufeinanderfolgende Reaktionssteuerelemente (70) derart angeordnet sind, daß die Laufrichtung der Reaktionsfront (9) zickzackförmig umgeleitet wird.

7. Chemischer Sauerstoffgenerator nach einem der Ansprüche 1 bis 4, dadurch gekennzeichnet, daß ein oder mehrere Reaktionssteuerelemente (71, 72) parallel zur Laufrichtung der Reaktionsfront (9) angeordnet sind.

8. Chemischer Sauerstoffgenerator nach Anspruch 7, dadurch gekennzeichnet, daß sich ein Reaktionssteuerelement (72) von der zündseitigen Wandung (4) des Gehäuses (1) des Sauerstoffgenerators parallel zur Laufrichtung der Reaktionsfront (9) bis in die Nähe der zündseitigen Wandung gegenüberliegenden Wandung (5) erstreckt, wobei sich das Reaktionssteuerelement (72) senkrecht zur Laufrichtung der Reaktionsfront von einer seitlichen Wandung (101) bis zu der dieser Wandung gegenüberliegenden Wandung (102) erstreckt.

9. Chemischer Sauerstoffgenerator nach einem der Ansprüche 1 bis 4, dadurch gekennzeichnet, daß das Reaktionssteuerelement in Form einer Förderschnecke (73) ausgebildet ist, die sich radial von einem geschlossenen Kern (15) bis zur Wandung des Gehäuses (1) und axial mindestens in einem Teilbereich der Länge des Gehäuses (1) erstreckt.

10. Chemischer Sauerstoffgenerator nach einem der Ansprüche 1 bis 4, dadurch gekennzeichnet, daß das Reaktionssteuerelement als spiralig gewundenes Band (74) ausgeführt ist und sich in einem dosenförmigen Gehäuse (1) von einem Boden (16) bis zu einem Deckel (17) erstreckt, wobei das eine Ende des Bandes (74) mit der Außenwandung des Gehäuses (1) verbunden ist und das andere Ende des Bandes (74) in der Nähe des Zentrums des Gehäuses (1) liegt, wodurch ein spiralig gewundener Kanal (18) gebildet wird, der an seinem einen Ende mit einem Zünder (3) und an seinem anderen Ende mit einem Sauerstoffauslaß (6) versehen ist.

## Claims

1. Chemical oxygen generator having a chemical filling which is arranged inside a housing and which by means of an igniter is reacted exothermally in an oxygen-liberating manner, with the reaction running in the form of a reaction front two-dimensionally through the chemical filling starting from the ignition-side wall of the housing, having at least one reaction control element which is arranged inside the chemical filling and which is arranged transversely relative to the running direction of the reaction front and covers a portion of the area of the reaction front or is arranged so as to be parallel to the running direction of the reaction front, characterised in that the reaction control element (70, 71, 72, 73, 74) is built up out of a thermal insulator layer (15) and at least one layer (13, 14) which has good thermal conductivity.

2. Chemical oxygen generator according to claim 1, characterised in that the reaction control element (70, 71, 72, 73, 74) is built up in a sandwich-like manner from two layers (13, 14), which have good thermal conductivity, with a thermal insulator layer (15) arranged in between.

3. Chemical oxygen generator according to claim 1 or 2, characterised in that the layer of the reaction control element (70, 71, 72, 73, 74) that has good thermal conductivity is formed as a metal sheet (13, 14).

4. Chemical oxygen generator according to one of the claims 1 to 3, characterised in that the thermal insulator layer (15) of the reaction control element (70, 71, 72, 73, 74) is constructed of glass, ceramic or mineral material and is processed in the form of a fibre fleece, a fibre plate or as a foamed body.

5. Chemical oxygen generator according to one of the claims 1 to 4, characterised in that one or more reaction control elements (70) are arranged so as to be perpendicular to the running direction of the reaction front (9) and the reaction control elements (70) cover substantially 50% to 90% of the area of the reaction front (9).

6. Chemical oxygen generator according to claim 5, characterised in that successive reaction control elements (70) are arranged in such a way that the running direction of the reaction front (9) is diverted in the form of a zigzag.

7. Chemical oxygen generator according to one of the claims 1 to 4, characterised in that one or more reaction control elements (71, 72) are arranged so as to be parallel to the running direction of the reaction front (9).

8. Chemical oxygen generator according to claim 7, characterised in that a reaction control element (72) extends from the ignition-side wall (4) of the housing (1) of the oxygen generator, so as to be parallel to the running direction of the reaction front (9), until close to the wall (5) lying opposite the ignition-side wall, with the reaction control element (72) extending so as to be perpendicular to the running direction of the reaction front from a lateral wall (101) as far as the wall (102) which lies opposite this wall.

9. Chemical oxygen generator according to one of the claims 1 to 4, characterised in that the reaction control element is formed in the manner of a conveyor worm (73) which extends radially from a closed core (15) as far as the wall of the housing (1) and axially at least along a partial region of the length of the housing (1).

10. Chemical oxygen generator according to one of the claims 1 to 4, characterised in that the reaction control element is realized as a spirally wound band (74) and extends in a can-shaped housing (1) from a base (16) as far as a cover (17), with the one end of the band (74) being connected with the outer wall of the housing (1) and the other end of the band (74) lying close to the centre of the housing (1), whereby a spirally wound channel (18) is formed, which channel (18) at its one end is provided with an igniter (3) and at its other end is provided with an oxygen outlet (6).

## Revendications

1. Générateur chimique d'oxygène comportant, à l'intérieur d'un boîtier, une charge de produits chimiques qui est amenée, par une amorce, à subir une réaction exothermique libérant de l'oxygène, la réaction se déroulant, sous la forme d'un front de réaction, en nappe, s'étendant à partir de la paroi du boîtier située du côté de l'amorce et traversant la charge de produits chimiques, le générateur comportant au moins un élément de commande de la réaction, situé à l'intérieur de la charge de produits chimiques, qui est disposé perpendiculairement à la direction de progression du front de réaction et recouvre une partie de la surface du front de réaction ou est disposé parallèlement à la direction de progression du front de réaction, caractérisé en ce que l'élément de commande de la réaction (70, 71, 72, 73, 74) est formé par une couche d'isolant thermique (15) et au moins une couche de matériau (13, 14) bon conducteur de chaleur.

2. Générateur chimique d'oxygène selon la revendication 1, caractérisé en ce que l'élément de commande de la réaction (70, 71, 72, 73, 74) est constitué, à la façon d'un sandwich, de deux couches (13, 14) bonnes conductrices de chaleur et d'une couche (15) de matériau isolant thermique disposée entre elles.

3. Générateur chimique d'oxygène selon la revendication 1 ou 2, caractérisé en ce que la couche bonne conductrice de chaleur de l'élément de commande de la réaction (70, 71, 72, 73, 74) est formée par une plaque métallique (13, 14).

4. Générateur chimique d'oxygène selon l'une des revendications 1 à 3, caractérisé en ce que la couche (15) de matériau isolant thermique de l'élément de commande de la réaction (70, 71, 72, 73, 74) est constituée de verre, matériau céramique ou minéral et se présente sous la forme d'un non-tissé, d'un panneau de fibres, ou d'un corps moussé.

5. Générateur chimique d'oxygène selon l'une des revendications 1 à 4, caractérisé en ce qu'un ou plusieurs éléments de commande de la réaction (70) sont disposés perpendiculairement à la direction de progression du front de réaction (9) et les éléments de commande de la réaction (70) recouvrent environ 50 % à 90 % de la surface du front de réaction (9).

6. Générateur chimique d'oxygène selon la revendication 5, caractérisé en ce que des éléments de commande de la réaction (70) successifs sont disposés de telle sorte que la direction de progression du front de réaction (9) est déviée selon une forme de zigzag.

7. Générateur chimique d'oxygène selon l'une des revendications 1 à 4, caractérisé en ce qu'un ou plusieurs éléments de commande de la réaction (71, 72) sont disposés parallèlement à la direction de progression du front de réaction (9).

8. Générateur chimique d'oxygène selon la revendication 7, caractérisé en ce qu'un élément de commande de la réaction (72) s'étend de la paroi (4) du boitier (1) du générateur chimique d'oxygène située du côté de l'amorce, de façon parallèle à la direction de progression du front de réaction (9) jusqu'à proximité de la paroi (5) opposée à la paroi située du côté de l'amorce, l'élément de commande de la réaction (72) s'étendant perpendiculairement à la direction de progression du front de réaction, d'une paroi latérale (101) jusqu'à la paroi (102) opposée à cette paroi.

9. Générateur chimique d'oxygène selon l'une des revendications 1 à 4, caractérisé en ce que l'élément de commande de la réaction hélicoïdal se présente sous la forme d'une hélice transporteuse (73) s'étendant radialement d'un noyau fermé (15) jusqu'à la paroi du boîtier (1) et axialement au moins sur une partie de la longueur du boîtier (1).

10. Générateur chimique d'oxygène selon l'une des revendications 1 à 4, caractérisé en ce que l'élément de commande de la réaction est conformé en bande (74) enroulée en spirale et s'étend, à l'intérieur d'un boîtier (1) en forme de boite, d'un fond (16) jusqu'à un couvercle (17), l'une des extrémités de la bande (74) étant reliée à la paroi extérieure du boitier (1) et l'autre extrémité de la bande (74) reposant à proximité du centre du boîtier (1), ce qui forme un canal (18) enroulé en spirale, qui est pourvu, à l'une de ses extrémités, d'une amorce (3) et, à l'autre extrémité, d'une sortie d'oxygène (6).
